(19) **Europäisches Patentamt**
**European Patent Office**
**Office européen des brevets**

(11) **EP 4 210 160 A2**

(12) # EUROPEAN PATENT APPLICATION

(43) Date of publication:
**12.07.2023 Bulletin 2023/28**

(21) Application number: **22217139.9**

(22) Date of filing: **29.12.2022**

(51) International Patent Classification (IPC):
**H01M 50/443** (2021.01)    **H01M 50/446** (2021.01)
**H01M 50/457** (2021.01)    **H01M 50/489** (2021.01)
**H01M 50/491** (2021.01)

(52) Cooperative Patent Classification (CPC):
**H01M 50/457; H01M 50/443; H01M 50/446;**
**H01M 50/489; H01M 50/491**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.01.2022 KR 20220002346**
**22.12.2022 KR 20220181370**

(71) Applicants:
• **SK Innovation Co., Ltd.**
**Seoul 03188 (KR)**
• **SK ie technology Co., Ltd.**
**Jongno-gu**
**Seoul**
**03188 (KR)**

(72) Inventors:
• **LEE, Chang Q**
**34124 Daejeon (KR)**
• **JI, Sang Yoon**
**34124 Daejeon (KR)**
• **PARK, Hye Jin**
**34124 Daejeon (KR)**
• **CHEON, Young Eun**
**34124 Daejeon (KR)**
• **KIM, Sang Hoon**
**34124 Daejeon (KR)**
• **CHOI, Jae Suk**
**34124 Daejeon (KR)**

(74) Representative: **Prüfer & Partner mbB**
**Patentanwälte · Rechtsanwälte**
**Sohnckestraße 12**
**81479 München (DE)**

(54) **SEPARATOR FOR A SECONDARY BATTERY AND METHOD FOR PRODUCING THE SAME**

(57) Provided are a separator and a method for producing the same, and more particularly, a separator which may secure battery stability and has characteristics of significantly low heat shrinkage even at a high temperature and minimally increased resistance, and a method for producing the same.

The separator according to the present disclosure comprises: a porous substrate; and an inorganic particle layer positioned on one or both surfaces of the porous substrate, wherein the inorganic particle layer comprises inorganic particles and a rod-shaped inorganic binder.

FIG. 3

EP 4 210 160 A2

**Description**

**TECHNICAL FIELD**

The following disclosure relates to a separator for a secondary battery and a method for producing the same, and more particularly, to a separator for a secondary battery which may secure stability of a secondary battery and has characteristics of significantly low heat shrinkage even at a high temperature, high adhesive strength, and minimally increased resistance, and a method for producing the same.

**BACKGROUND**

Recently, since a secondary battery has a higher capacity and gets larger in order to be applied to an electric vehicle and the like, it has become a very important element to secure battery safety.

Battery stability may be secured by, for example, preventing battery ignition which occurs due to a forced internal short circuit by external impact, and the like. For example, inorganic particles and an organic binder are introduced to the entire area of a porous substrate made of polyolefin and the like, to form an inorganic particle layer in a form in which the inorganic particles are connected to each other by the organic binder and also are adhered to the porous substrate, thereby securing battery safety.

Korean Patent Laid-Open Publication No. 10-2014-0147742 discloses a separator for a secondary battery including an inorganic particle layer adhered on a porous substrate by an organic binder, to secure battery stability. However, the separator as such has various problems which deteriorate battery performance, such as, an organic binder being dissolved in an electrolyte and eluted during charge and discharge of a secondary battery and an organic binder being swollen by an electrolyte to close a porous layer in the separator.

Thus, it is necessary to develop a new separator material in which inorganic particles may be fixed with high adhesive strength on a porous substrate with a decreased content of the organic binder or without the organic binder, heat shrinkage is significantly low even at a high temperature, and a resistance increase is minimized.

The inventors of the present disclosure found that when a separator including an inorganic particle coating layer having pores formed by connecting inorganic particles to each other is produced, by applying a mixture of specific rod-shaped inorganic particles and common inorganic particles on one or both surfaces of a porous substrate such as polyolefin, a battery may have high adhesive strength, excellent thermal properties, and excellent electrical properties, that is, excellent stability, and excellent charge and discharge characteristics, thereby completing the present disclosure.

**SUMMARY**

An embodiment of the present disclosure is directed to providing a separator which may secure battery stability to solve the above problems.

Another embodiment of the present disclosure is directed to providing a separator which is chemically stable even at a high temperature, has excellent adhesive strength, and has excellent electrical properties.

Still another embodiment of the present disclosure is directed to providing a method for producing a separator, which easily produce a separator capable of securing battery stability.

In one general aspect, a separator for a secondary battery includes: a porous substrate; and an inorganic particle layer laminated on one or both surfaces of the porous substrate, wherein the inorganic particle layer includes inorganic particles and a rod-shaped inorganic binder.

In the separator for a secondary battery according to an exemplary embodiment, a polar group may be introduced to the surface of the porous substrate on which the inorganic particle layer is positioned by a surface treatment. That is, the porous substrate may be a porous substrate having a surface subjected to an oxidation treatment.

In the separator for a secondary battery according to an exemplary embodiment, the rod-shaped inorganic binder may be pseudo-boehmite particles.

In the separator for a secondary battery according to an exemplary embodiment, the pseudo-boehmite particles may have an aspect ratio (LID ratio) of 2 to 30.

In the separator for a secondary battery according to an exemplary embodiment, the pseudo-boehmite particles may have an average diameter of 1 to 10 nm and an average length (L) of 2 to 100 nm.

In the separator for a secondary battery according to an exemplary embodiment, the inorganic particles may have any one or more shapes selected from the group consisting of spherical, prismatic, and amorphous shapes.

In the separator for a secondary battery according to an exemplary embodiment, the inorganic particles may be any one or more selected from metal oxides, metal nitrides, metal carbides, metal carbonates, metal hydroxide, and metal carbonitrides.

In the separator for a secondary battery according to an exemplary embodiment, the inorganic particles may be boehmite.

In the separator for a secondary battery according to an exemplary embodiment, the inorganic particles may have an average diameter of 0.001 to 20 $\mu$m.

In the separator for a secondary battery according to an exemplary embodiment, the inorganic particle layer may include 3 to 20 parts by weight of the rod-shaped inorganic binder with respect to 100 parts by weight of the inorganic particles.

In the separator for a secondary battery according to an exemplary embodiment, the porous substrate may include a polyolefin-based resin, and the porous substrate may have an average diameter of pores of 0.01 to 10 $\mu$m and a porosity of 5 to 95%.

In the separator for a secondary battery according to an exemplary embodiment, the polyolefin-based resin may be one or more selected from the group consisting of high-density polyethylene, low-density polyethylene, linear low-density polyethylene, ultrahigh molecular weight polyethylene, polypropylene, and copolymers thereof.

In the separator for a secondary battery according to an exemplary embodiment, a thickness ratio of the porous substrate : the inorganic particle layer may be 1:1 to 10:1.

In the separator for a secondary battery according to an exemplary embodiment, the separator may have a peel strength between the porous substrate and the inorganic particle layer of 40 gf/25 mm or more, as measured in accordance with ASTM D903.

In the separator for a secondary battery according to an exemplary embodiment, the separator may have a peel strength between the porous substrate and the inorganic particle layer of 80 gf/25 mm or more, as measured in accordance with ASTM D903.

In the separator for a secondary battery according to an exemplary embodiment, the separator may have a heat shrinkage rate at 170°C of 5% or less, and a ΔGurley permeability calculated by the following Calculation Formula 1 of 50 sec/100 cc or less, in a Gurley permeability measured in accordance with ASTM D726:

$$[\text{Calculation Formula 1}]$$

$$\Delta\text{Gurley permeability (sec/100 cc)} = P_m - P_s$$

wherein $P_m$ is a gas permeability of a separator, and $P_s$ is a gas permeability of a porous substrate.

In the separator for a secondary battery according to an exemplary embodiment, the inorganic particle layer may further include an organic binder.

In the separator for a secondary battery according to an exemplary embodiment, the inorganic particle layer may not include the organic binder.

In another general aspect, a method for producing a separator for a secondary battery includes: dispersing a rod-shaped inorganic binder in a solvent to produce a dispersion; adding inorganic particles to the dispersion to produce a coating solution; and coating one or both surfaces of a porous substrate with the coating solution to form an inorganic particle layer.

In an exemplary embodiment, the coating solution may be produced by adding the inorganic binder and the inorganic particles simultaneously.

In the method for producing a separator for a secondary battery according to an exemplary embodiment, the dispersion may further include an organic acid.

In the method for producing a separator for a secondary battery according to an exemplary embodiment, the dispersion may have a hydrogen ion concentration index (pH) of 3 to 6.

In the method for producing a separator for a secondary battery according to an exemplary embodiment, the dispersion may include 0.1 to 10 wt% of the rod-shaped inorganic binder, 0.05 to 1 wt% of the organic acid, and a remainder of the solvent.

In the method for producing a separator for a secondary battery according to an exemplary embodiment, the coating solution may include 1 to 20 wt% of the inorganic particles, 0.1 to 5 wt% of the rod-shaped inorganic binder, 0.01 to 1 wt% of the organic acid, and a remainder of the solvent.

In the method for producing a separator for a secondary battery according to an exemplary embodiment, a polar group may be introduced to the surface of the porous substrate on which the inorganic particle layer is positioned by a surface treatment.

In the method for producing a separator for a secondary battery according to an exemplary embodiment, the separator may have a peel strength between the porous substrate and the inorganic particle layer of 40 gf/25 mm or more, as measured in accordance with ASTM D903.

In the method for producing a separator for a secondary battery according to an exemplary embodiment, the separator may have a heat shrinkage rate at 170°C of 5% or less, and a ΔGurley permeability calculated by the following Calculation Formula 1 of 50 sec/100 cc or less, in a Gurley permeability measured in accordance with ASTM D726:

[Calculation Formula 1]

$$\Delta\text{Gurley permeability (sec/100 cc)} = P_m - P_s$$

wherein $P_m$ is a gas permeability of a separator, and $P_s$ is a gas permeability of a porous substrate.

In the method for producing a separator for a secondary battery according to an exemplary embodiment, the separator may have a heat shrinkage rate at 170°C of 3% or less.

In still another general aspect, a secondary battery includes the separator for a secondary battery described above.

The secondary battery may be a secondary battery including a negative electrode, a positive electrode, and a separator between the negative electrode and the positive electrode, and the separator may include the separator for a secondary battery.

In the secondary battery according to an exemplary embodiment, the secondary battery may have a resistance increase rate calculated by the following Calculation Formula 2 of 10% or less:

[Calculation Formula 2]

$$\text{Resistance increase rate (\%)} = ((R_m - R_s) / R_s) \times 100$$

wherein $R_m$ is resistance of a separator for a secondary battery, and $R_s$ is resistance of a porous substrate.

In the secondary battery according to an exemplary embodiment, the secondary battery may have the resistance increase rate of 3% or less.

In the secondary battery according to an exemplary embodiment, when a unit process of charge and discharge is repeated 20 times at room temperature (25±5°C), the secondary battery may have a standard deviation of a resistance value (mΩ) measured for each unit process of 30 or less.

In the secondary battery according to an exemplary embodiment, the secondary battery may have a standard deviation of the resistance value of 15 or less.

In the secondary battery according to an exemplary embodiment, the secondary battery may have an average of the resistance value of 1500 mΩ or less.

Other features and aspects will be apparent from the following detailed description, the drawings, and the claims.

**BRIEF DESCRIPTION OF THE DRAWINGS**

FIG. 1 is a transmission electron microscopic image of a rod-shaped inorganic binder used in Example 1.

FIGS. 2 and 3 are scanning electron microscopic images of a separator according to Example 1.

FIGS. 4 and 5 are scanning electron microscopic images of a separator according to Comparative Example 1.

**DETAILED DESCRIPTION OF EMBODIMENTS**

Technical terms and scientific terms used in the present specification have the general meaning understood by those skilled in the art to which the present invention pertains unless otherwise defined, and a description for the known function and configuration obscuring the gist of the present specification will be omitted in the following description and the accompanying drawings.

In addition, the singular form used in the present specification may be intended to also include a plural form, unless otherwise indicated in the context.

In addition, units used in the present specification without particular mention are based on weights, and as an example, a unit of % or ratio refers to a wt% or a weight ratio and wt% refers to wt% of any one component in a total composition, unless otherwise defined.

The term "comprise" in the present specification is an open-ended description having a meaning equivalent to the term such as "is/are provided", "contain", "have", or "is/are characterized", and does not exclude elements, materials, or processes which are not further listed.

The term "rod-shaped" in the present specification refers to being extended in any one direction in a particle shape, in which the extended length is shorter than a wire shape or a fiber shape, and may refer to bar-shaped, column-shaped, or the like.

The term "aspect ratio (L/D)" of the rod shape in the present specification refers to a ratio between an average length (L) and an average diameter (D), in which the average length may refer to a length in the extended direction of particles, and the average diameter may refer to a length in a direction perpendicular to the measuring direction of the average length.

In the present specification, the average length and the average diameter are determined from averages of values obtained by measuring 20 particles each arbitrarily selected from five images obtained by a transmission electron microscope (TEM, JEOL Ltd, JEM-2100F).

The term "boehmite" in the present specification is represented by the chemical formula $AlO(OH)$, and refers to a sheet structure formed by Al-(O,OH) octahedra being bonded.

The term "pseudo-boehmite" in the present specification is represented by the chemical formula $AlO(OH)$, and refers to a boehmite-like structure of microcrystal due to its high moisture content.

Conventionally, a separator for a secondary battery includes an inorganic particle layer adhered on a porous substrate by an organic binder, for securing battery stability. However, the separator as such has various problems to deteriorate battery performance, such as, an organic binder being dissolved in an electrolyte and eluted during charge and discharge of a secondary battery and an organic binder being swollen by an electrolyte to close a porous layer in the separator.

Thus, it is necessary to develop a new separator material in which inorganic particles may be fixed with high adhesive strength on a porous substrate with a decreased content of the organic binder or without the organic binder, heat shrinkage is significantly low even at a high temperature, and a resistance increase is minimized.

The inventors of the present disclosure found that when specific inorganic particles having a specific shape are mixed with other inorganic particles, the specific inorganic particles act as a binder, so that the inorganic particles may be adhered on a porous substrate with high adhesive strength, thereby completing the present disclosure.

Specifically, they found that when a separator including an inorganic particle coating layer having pores formed by connecting inorganic particles to each other is produced, by applying a mixture of specific rod-shaped inorganic particles and common inorganic particles on one or both surfaces of a porous substrate such as polyolefin, a battery may have high adhesive strength, excellent thermal properties, and excellent electrical properties, that is, excellent stability, and excellent charge and discharge characteristics, thereby completing the present disclosure.

The separator for a secondary battery according to an exemplary embodiment includes: a porous substrate; and an inorganic particle layer positioned on one or both surfaces the porous substrate, wherein the inorganic particle layer includes inorganic particles and a rod-shaped inorganic binder.

The separator may be fixed on the porous substrate with high adhesive strength since inorganic particles are connected to each other by a rod-shaped inorganic binder to form pores and are anchored by the rod-shaped inorganic binder, and also, has low heat shrinkage and minimally increased resistance even at a high temperature, so that it is chemically stable and may have excellent electrical properties.

In an embodiment, a polar group may be introduced to the surface of the porous substrate on which the inorganic particle layer is positioned by a surface treatment. Here, the polar group may be, for example, a carboxylic acid group, an aldehyde group, or a hydroxyl group, but is not limited thereto.

The surface treatment is not limited as to the means, but may be a plasma treatment, a corona discharge treatment, or an electron beam treatment in the presence of one or more selected from oxygen, air, and ozone, and more specifically, the surface treatment may be a corona discharge treatment.

Since the polar group is introduced to the surface of the porous substrate as described above, stronger adhesive strength may be imparted by a hydrogen bond or a chemical bond between the inorganic particle layer and the polar group on the surface of the porous substrate. Accordingly, the separator may have significantly low heat shrinkage even at a high temperature and also minimally increased resistance. In addition, the above characteristics may be implemented even when an organic binder is not used or an organic binder to be used if necessary is further contained, various problems caused by the organic binder may not arise.

In addition, in the case in which a porous substrate to which a polar group is introduced by the surface treatment is used, the inorganic particles are sufficiently bound to each other even when a small rod-shaped inorganic binder having an aspect ratio of 30 or less or less than 30 is used, and anchoring between the porous substrate and the inorganic particles is further facilitated, so that adhesion, heat resistance, and electrical properties may be better.

In an embodiment, the separator for a secondary battery (hereinafter, referred to as separator) may provide an inorganic particle layer in which bonding between inorganic particles and bonding between inorganic particles and a porous substrate are stronger than a conventional inorganic particle layer including an organic binder and inorganic particles, and thus, may provide a new separator which has further improved heat resistance and may prevent ignition or rupture due to an abnormal phenomenon such as a rapid temperature rise.

That is, the separator according to the present disclosure may have all of the effects of excellent thermal stability, excellent electrochemical safety, excellent lithium ion conductivity, excellent preventive property against electrolyte solution contamination, and an excellent electrolyte solution impregnation rate.

In an exemplary embodiment, the separator may further include an organic binder for strengthening adhesive strength of the inorganic particle layer formed on the porous substrate. In this case, the separator may contain a significantly smaller amount of the organic binder than a conventional separator in which inorganic particles are connected and fixed using only an organic binder to form pores, and thus, the disadvantages described above shown by the organic binder may be decreased. Specifically, the content of the organic binder may be less than 50 wt%, specifically less than 30 wt%, and more specifically, less than 10 wt% with respect to the content of the organic binder used in the inorganic particle layer using only the organic binder.

The organic binder refers to a binder known in the art other than the inorganic binder of the present disclosure, and may include polymer-based organic binders known in the art such as ester-based polymer, amide-based polymer, imide-based polymer, styrene-based polymer, vinyl alcohol-based polymer, vinylpyrrolidone-based polymer, cellulose-based polymer, fluorine-based polymer, and acryl-based polymer, a crosslinkable compound which is crosslinked to serve as a binder, such as a silane compound having a reactive group, and metal alkoxide or metal alkanoate having a polar group, but is not limited thereto.

Specifically, the ester-based polymer may be selected from polyethylene terephthalate, polyethylene naphthalate (PEN), and the like, the amide-based polymer may be selected from polyamide-6, polyamide-66, and the like, the imide-based polymer may be selected from polyimide, polyether imide, polyester imide, and the like, and the acryl-based polymer may be, specifically, for example, selected from polyacrylamide, polymethacrylate, polyethylacrylate, polyacrylate, polybutylacrylate, sodium polyacrylate, acrylic acid-methacrylic acid copolymer, and the like. The styrene-based polymer may be, specifically, for example, selected from polystyrene, polyalphamethylstyrene, polybromostyrene, and the like, the vinylalcohol-based polymer may be, specifically, for example, selected from polyvinyl alcohol, polyvinyl acetate, polyvinyl acetate-polyvinyl alcohol copolymer, and the like, and the vinylpyrrolidone-based polymer may be, specifically, for example, selected from polyvinylpyrrolidone, copolymer including vinylpyrrolidone, and the like. The fluorine-based polymer may be, specifically, for example, any one selected from polyvinylidene fluoride, polytetrafluoroethylene, polyhexafluoropropylene, hexafluoropropylene, polyfluoride-hexafluoropropylene, polychlorotrifluoroethylene, and the like, or a mixture or two or more thereof, but is not limited thereto.

Specifically, the polymer-based organic binder described above may have a weight average molecular weight range of 5,000 to 3,000,000 g/mol, but is not limited thereto, and may have a glass transition temperature of 100°C to 200°C, but is not limited thereto.

In addition, in the metal alkanoate having a polar group, the polar group may be any one or two or more selected from a hydroxyl group, a carbonyl group, an amine group, and a thiol group, but is not limited thereto. An example of the metal alkanoate having a polar group may be aluminum L-lactate, but is not limited thereto.

In addition, an example of a crosslinkable compound which is crosslinked to serve as a binder, such as a silane compound having a reactive group may be any one or more selected from γ-glycidoxypropyltrimethoxysilane, γ-glycidoxypropylmethyldiethoxysilane, β-(3,4-epoxydichlorohexyl)ethyltrimethoxysilane, γ-methacryloxypropyltrimethoxysilane, γ-methacryloxypropylmethyldimethoxysilane, tetraethoxysilane (TEOS), but is not limited thereto.

In another exemplary embodiment, the separator according to the present disclosure may not include the organic binder described above, unlike the conventional art.

That is, since the separator as such may have a smaller content of the organic binder than the conventional art or no organic binder, the problems such as pore blockage and swelling caused by the organic binder may be suppressed. In addition, ion movement is excellent, so that there is no obstacle to movement of ions such as a lithium ion, and electrical properties of a battery such as a charge and discharge capacity and efficiency may be significantly improved. In addition, the inorganic content may be increased to significantly increase heat resistance and chemical resistance.

In an embodiment, the separator may have a heat shrinkage rate at 170°C of 5% or less, specifically 3% or less, and more specifically 1 to 2.5% in a TD direction, and a heat shrinkage rate at 150°C and 160°C of 5% or less, specifically 3% or less, and more specifically 1 to 2%.

In an embodiment, the separator may have a ΔGurley permeability of 50 sec/100 cc or less, specifically 10 to 45 sec/100 cc or less.

In an embodiment, the separator may have a peel strength of 40 gf/25 mm or more, specifically 80 gf/25 mm or more, and more specifically 80 to 120 gf/25 mm.

The separator is formed by forming an inorganic particle layer on a porous substrate, and the inorganic particle layer has a porous structure including inorganic particles and an inorganic binder which is the rod-shaped inorganic binder. Thus, since the separator is a porous structure having pores formed as a whole, in which lithium ions may move smoothly through the pores of the separator and a large amount of the electrolyte solution is filled to have a high impregnation rate, battery performance improvement may be promoted.

Since the separator has a porous structure as described above, the separator has pores formed therein and may have porosity. The size and the porosity of pores formed in the separator may be appropriately adjusted depending on the porosity of the porous substrate and the thickness of the inorganic particle layer. As a specific example, the average size of the pores formed in the separator, that is, the average diameter of pores, may be 0.001 to 10 $\mu$m, and the porosity may be 5 to 95%, 20 to 60%, or 30 to 60%.

The separator is formed by coating an inorganic particle layer on a porous substrate, and the porous substrate and the inorganic particle layer form certain thicknesses. Here, a thickness ratio of the porous substrate : the inorganic particle layer of the separator is not limited as long as the purpose of the present disclosure is achieved, but for example, may be 1:1 to 30:1, specifically 1:1 to 20:1, and more specifically 1:1 to 10:1. The separator as such may secure excellent battery stability considering the thickness of the inorganic particle layer, but is not limited thereto.

The porous substrate of the separator is not limited as long as it is used as the substrate of a conventional separator, but may be any one or more selected from film, sheet, non-woven fabric, and fabric of polymer materials. Specifically, the porous substrate may include a porous substrate made of a polyolefin-based resin. The polyolefin-based resin may be one or more selected from the group consisting of high-density polyethylene, low-density polyethylene, linear low-density polyethylene, ultrahigh molecular polyethylene, polypropylene, and copolymers thereof, but is not limited thereto.

Specifically, in terms of effectively achieving the physical properties to be desired in the present disclosure, the porous substrate may be in a film form which is produced by a common wet method including extruding and stretching a melt in which a polyolefin-based resin and a pore forming agent are mixed to produce a film and then extracting the pore forming agent by solvent.

The pore forming agent is not particularly limited, but for example, may be one or a combination of two or more selected from the group consisting of aliphatic or cyclic hydrocarbons such as nonane, decane, decalin, paraffin oil, and paraffin wax, phthalic acid esters such as dibutyl phthalate and dioctyl phthalate, C10-C20 fatty acids such as palmitic acid, stearic acid, oleic acid, linoleic acid, and linolenic acid, and C10-C20 fatty acid alcohols such as alcohol palmitate, alcohol stearic acid, and alcohol oleate.

The size of the pores formed in the porous substrate is not limited as long as lithium ions move well, but for example, the average diameter of 0.01 to 20 $\mu$m, specifically 0.05 to 5 $\mu$m, or 0.05 to 1 $\mu$m may be advantageous for smooth movement of lithium ions and impregnation of the electrolyte solution. Here, the porosity may be 5 to 95%, specifically 30 to 60%.

The porous substrate may form a certain thickness with any one or more selected from a film, a sheet, a non-woven fabric, and a fabric, as described above. The thickness of the porous substrate is not particularly limited, but may be 1 to 100 $\mu$m, specifically 5 to 60 $\mu$m, and more specifically 5 to 20 $\mu$m. In addition, the porous substrate may be in a porous film form, in terms of effectively achieving the physical properties to be desired in the present disclosure.

The inorganic particle layer is formed on one or both surfaces of the porous substrate, and may have a porous structure in which the inorganic particles are connected to each other to form pores. The problems of the conventional separator may be solved by using no organic binder or a smaller amount of the organic binder than the conventional amount in the inorganic particle layer.

The inorganic particle layer increases the durability of the porous substrate to serve to improve the durability degree of the separator. The inorganic particle layer may be formed on 90% or more of the entire area of each surface, and specifically 95% or more, and more specifically 100% except the case in which fine defects occur, of the entire area of each surface of the porous substrate, for the one or both surfaces of the porous substrate.

The inorganic particle layer of the separator is formed by coating a uniform mixture of the rod-shaped inorganic binder and inorganic particles in a form other than a rod, and it is considered that the inorganic particles are fixed to each other by a chemical secondary bond such as van der Waals and a hydrogen bond or a flocculation phenomenon, so that the inorganic particles are not easily released and the adhesive strength between the inorganic particles may be significantly improved.

The rod-shaped inorganic binder is rod-shaped inorganic particles, and may be particles produced from one or two or more selected from pseudo-boehmite, boehmite, $Ga_2O_3$, SiC, $SiC_2$, Quartz, NiSi, Ag, Au, Cu, Ag-Ni, ZnS, $Al_2O_3$, $TiO_2$, $CeO_2$, MgO, NiO, $Y_2O_3$, CaO, $SrTiO_3$, $SnO_2$, ZnO, and $ZrO_2$, but is not limited thereto.

Specifically, the rod-shaped inorganic binder may be rod-shaped pseudo-boehmite particles. The rod-shaped pseudo-boehmite particles bind the inorganic particles with excellent adhesive strength as an inorganic binder to adhere the inorganic particles on the porous substrate.

The rod-shaped inorganic binder like the rod-shaped pseudo-boehmite particles is not limited as long as the purpose of the present disclosure is achieved, but for example, may have a shorter average length than a wire-shaped or fiber-shaped inorganic binder.

The aspect ratio of the rod-shaped inorganic binder is not particularly limited, but for example, is as short as 2 to 30, specifically 2 or more and less than 30, and significant improvement in adhesion may be achieved even with the aspect ratio. In particular, when a polar group is introduced to the surface of the porous substrate, the separator for a secondary battery according to an exemplary embodiment may have better adhesion, heat resistance, and battery characteristics.

Here, the aspect ratio of the rod-shaped inorganic binder may be 2 or more, 5 or more, 10 or more, 15 or more and 20 or less, 25 or less, less than 30, 30 or less, or a value between the numerical values. For example, it may be 2 to 30, 5 to 30, 10 to 30, or 15 to 30, and 2 or more and less than 30, 5 or more and less than 30, 10 or more and less than 30, and 15 or more and less than 30. In another example, it may be 5 to 25, 5 to 20, or 10 to 20.

The average length and the average diameter of the rod-shaped inorganic binder are not limited as long as the aspect ratio described above is satisfied. As an example, the average diameter (D) of the rod-shaped inorganic binder may be 1 to 10 nm, specifically 1 to 5 nm, and the average length is not particularly limited, but when a polar group is introduced to the surface of the porous substrate, significant physical properties may be shown even when the average length (L) is as short as 2 to 100 nm, specifically 5 to 80 nm, more specifically 5 nm to 50 nm, but they are not necessarily limited thereto.

The inorganic particles may be any one or two or more selected from metal oxides, metal nitrides, metal carbides, metal carbonates, metal hydroxides, metal carbonitrides, and the like, and may be one or more selected from boehmite, $Ga_2O_3$, SiC, $SiC_2$, quartz, NiSi, Ag, Au, Cu, Ag-Ni, ZnS, $Al_2O_3$, $TiO_2$, $CeO_2$, MgO, NiO, $Y_2O_3$, CaO, $SrTiO_3$, $SnO_2$, ZnO, $ZrO_2$, and the like, but are not necessarily limited thereto unless they are electrochemically unstable to greatly affect battery performance.

In an embodiment, the inorganic particles may be boehmite particles in terms of improving separator stability. Specifically, when the inorganic particles are boehmite particles and the rod-shaped inorganic binder described above is pseudo-boehmite particles, they are adhered on the porous substrate with a very high binding force to form an inorganic particle layer having excellent durability. Accordingly, a separator having maximized physical durability and heat stability may be provided.

The inorganic particles are not limited as long as they have shapes other than a rod shape so that they may form pores when mixed with the rod-shaped inorganic binder described above. Specifically, the inorganic particles may have any one or more shapes selected from the group consisting of spherical, prismatic, and amorphous shapes.

The size of the inorganic particles is not limited as long as the purpose of the present disclosure is achieved, and specifically, the size of the inorganic particles, that is, the average diameter, may be 0.001 to 20 $\mu$m, specifically 0.01 to 10 $\mu$m. The separator may have the porosity in the range described above, but is not necessarily limited thereto.

In the inorganic particle layer, the content of the rod-shaped inorganic binder mixed with the inorganic particles is not limited as long as the inorganic particles are firmly bound. In an embodiment, the inorganic particle layer may include 3 to 20 parts by weight, 3 to 15 parts by weight, or 5 to 15 parts by weight of the rod-shaped inorganic binder with respect to 100 parts by weight of the inorganic particles, but is not limited thereto.

The inorganic particle layer may further include other additives commonly known in the art, in addition to the inorganic particles and the rod-shaped inorganic binder described above. For example, the additive may be a dispersing agent, a lubricant, a defoaming agent, a thickening agent, but is not limited thereto, and the content may be a commonly used degree of content.

In an embodiment, the inorganic particle layer may be formed of the inorganic particles and the rod-shaped inorganic binder. The inorganic particle layer as such is adhered on the porous substrate with excellent adhesive strength without other additives and binders to secure battery stability, and has minimally increased resistance caused by other additives to have excellent electrical properties.

In an embodiment, the separator may have a heat shrinkage rate at 170°C of 5% or less, specifically 3% or less, and more specifically 1 to 2.5% in a TD direction, and a heat shrinkage rate at 150°C and 160°C of 5% or less, specifically 3% or less, and more specifically 1 to 2%.

In an embodiment, the separator may have a Gurley permeability calculated by the following Calculation Formula 1 of 50 sec/100 cc or less, specifically 10 to 45 sec/100 cc, in the Gurley permeability measured in accordance with ASTM D726.

```
[Calculation Formula 1]

ΔGurley permeability (sec/100 cc) = Pm - Ps
```

wherein $P_m$ is a gas permeability of a separator, and $P_s$ is a gas permeability of a porous substrate.

In an embodiment, the separator may have a peel strength of 40 gf/25 mm or more, specifically , 80 gf/25 mm or more, and more specifically 80 to 120 gf/25 mm.

Hereinafter, the method for producing a separator of the present disclosure will be described in detail.

In an embodiment, the method for producing a separator includes: dispersing inorganic particles and a rod-shaped inorganic binder in a solvent to produce a coating solution which is a dispersion; and coating one or both surfaces of a porous substrate with the coating solution and dried to form an inorganic particle layer.

In addition, the method for producing a separator according to an embodiment includes: a) dispersing a rod-shaped inorganic binder in a solvent to produce a dispersion; b) adding inorganic particles to the dispersion to produce a coating solution; and c) coating one or both surfaces of a porous substrate with the coating solution to form an inorganic particle layer. The method for producing a separator as such may produce the separator described above.

Hereinafter, when the method is described using the second embodiment for convenience, a) is a step of producing a dispersion in which a rod-shaped inorganic binder is dispersed, and the solvent which is a dispersion medium of a dispersion may include lower alcohols such as water, ethanol, methanol, and propanol, solvents such as dimethylformamide, acetone, tetrahydrofuran, diethylether, methylene chloride, DMF, N-ethyl-2-pyrrolidone, hexane, and cyclohexane, or mixtures thereof, but is not necessarily limited thereto.

In a), the solid content of the dispersion is not particularly limited, and for example, may be 1 to 50 wt%, 5 to 30 wt%, or 10 to 30 wt%, but is not limited thereto.

In a), the content of the rod-shaped inorganic binder dispersed in the dispersion is not limited as long as it may be dispersed in the solvent. Specifically, the rod-shaped inorganic binder may be included in a range of 0.01 wt% to 20 wt% or 0.1 wt% to 10 wt% with respect to the weight of the entire dispersion.

In a), the dispersion may further include an organic acid. The dispersion including the organic acid may disperse the rod-shaped inorganic binder (particles) having a more uniform particle size homogeneously to form a more uniform high quality inorganic particle layer having no defect.

Specifically, the organic acid may be any one or a mixture of two or more of acetic acid, propionic acid, butyric acid, lactic acid, oxalic acid, malic acid, tartaric acid, and citric acid, but when any one or more organic acids selected from acetic acid or lactic acid are used, the rod-shaped inorganic binder having more uniform size and shape may be uniformly dispersed.

The dispersion as such may have a relatively low hydrogen ion concentration index maintained by the organic acid. Specifically, the dispersion may have a hydrogen ion concentration index (pH) of less than 7, specifically 3 to 6, and more specifically 5 to 6 by the organic acid. Within the range described above, the rod-shaped inorganic binder may be uniformly dispersed to obtain a higher quality inorganic particle layer.

The amount of the organic acid added to the dispersion is not limited as long as the hydrogen ion concentration index of the dispersion is set to the range described above, but the organic acid may be included in a range of 5 wt% or less, specifically 3 wt% or less, and more specifically 0.05 wt% to 1 wt% with respect to the weight of the entire dispersion.

In an embodiment, the dispersion may include 0.1 to 10 wt% of the rod-shaped inorganic binder, 0.05 to 1 wt% of the organic acid, and a remainder of the solvent. Within the range, the dispersion may maintain excellent dispersibility even after adding the inorganic particles to be added later, and thus, a high-quality inorganic particle layer having no defect may be produced.

b) is a step of adding inorganic particles to the dispersion to form a coating solution. For example, a ball mill, a beads mill, a planetary mixer (pulverization and mixing by revolution/rotation), and the like are used to crush the aggregate of the inorganic particles to form the coating solution. Here, a crushing time is not limited as long as the aggregate is sufficiently crushed, and for example, it may be 0.01 to 20 hours, and the average particle diameter (D50) of the crushed inorganic particles may be 0.001 to 10 $\mu$m, but they are not necessarily limited thereto.

Here, the amount of the inorganic particles added to the dispersion may be 1 to 20 parts by weight or 3 to 15 parts by weight of the rod-shaped inorganic binder with respect to 100 parts by weight of the inorganic particles, but is not limited thereto as long as the purpose of the present disclosure is achieved.

In addition, the coating solution may include 0.1 to 10 parts by weight or 0.5 to 5 parts by weight of the organic acid with respect to 100 parts by weight of the inorganic particles, but is not limited thereto.

In an embodiment, in b), the coating solution may include 1 to 20 wt% of the inorganic particles, 0.1 to 5 wt% of the rod-shaped inorganic binder, 0.01 to 1 wt% of the organic acid, and a remainder of the solvent, and more specifically, when the solvent is water, may include 5 to 15 wt% of the inorganic particles, 0.1 to 1 wt% of the rod-shaped inorganic binder, 0.01 to 0.1 wt% of the organic acid, and a remainder of the solvent, but is not limited thereto.

c) is a step of coating one or both surfaces of a porous substrate with the coating solution to form an inorganic particle layer, and the coating method is not limited, and specifically, for example, may be a common coating method such as bar coating, dip coating, flow coating, knife coating, roll coating, gravure coating, and spray coating. The coating solution to be coated may be dried to form an inorganic particle layer. Specifically, the polyolefin-based porous substrate film is coated with the coating solution, and then dried to produce the separator of the present disclosure.

Since the descriptions of the porous substrate, the inorganic particles, the rod-shaped inorganic binder, and the produced separator are as described above, the detailed descriptions will be omitted hereinafter.

The separator according to an embodiment may be used as a separator of a lithium secondary battery. That is, the secondary battery according to an embodiment includes a negative electrode, a positive electrode, and a separator between the negative electrode and the positive electrode, and may include the separator according to an embodiment described above as the separator.

When the separator according to an embodiment is commonly used in a secondary battery, its production follows a common production method in which a negative electrode, a separator, and a positive electrode are arranged and assembled, and an electrolyte solution is injected thereto to complete the battery, and thus, the production method will not be described any more in detail.

The positive electrode is not limited as long as it is a common material used as a positive electrode of a secondary battery, and, for example, may be lithiated magnesium oxide, lithiated cobalt oxide, lithiated nickel oxide, or a composite oxide formed by a combination thereof, and the like.

The negative electrode active material is not limited as long as it is a common negative electrode active material used as a negative electrode of a secondary battery, and for example, may be a lithium metal, activated carbon, carbon-based materials such as graphite, and the like.

Each of the positive electrode active material and the negative electrode active material is used by binding the material to a positive electrode current collector or a negative electrode current collector. As the positive electrode current collector, an aluminum foil, a nickel foil, and the like may be used, and the negative electrode current collector may be selected from copper, nickel, and the like, but since any material may be used without limitation as long as it is commonly used, they are not limited thereto.

Since the electrolyte solution used in the present disclosure is not limited as long as it is used in the art, it will not be described any more in the present disclosure.

The secondary battery produced using the separator of an embodiment may have a standard deviation of a resistance value (mΩ) measured for each unit process of 30 or less, specifically, 20 or less, and more specifically, 0.1 to 15, when a unit process of charge and discharge is repeated 20 times at room temperature ($25 \pm 5°C$).

Here, the average of the resistance value may be 1500 mΩ or less, specifically 1300 to 1450 mΩ, but is not limited thereto.

The secondary battery produced using the separator according to an embodiment may have a resistance increase rate calculated by the following Calculation Formula 2 of 10% or less, specifically 5% or less, more specifically 3% or less, and still more specifically 0.1 to 2.5%:

[Calculation Formula 2]

$$\text{Resistance increase rate (\%)} = ((R_m - R_s) \: / \: R_s) \times 100$$

wherein $R_m$ is resistance of a separator, and $R_s$ is resistance of a porous substrate.

Hereinafter, specific examples are presented for better understanding of the present disclosure, but the following examples are only illustrative of the present disclosure, and do not limit the scope of the present disclosure.

[Method of evaluating physical properties]

1. Evaluation of peel strength

A tensile measurement device (3343) available from INSTRON was used to measure a peel strength between a porous substrate and an inorganic particle layer by a 180° peel test method (ASTM D903).

2. Evaluation of heat shrinkage rate

A separator of 10 cm×10 cm marked with a TD direction was allowed to stand at 150, 160, and 170°C for 1 hour each, and then an area reduction rate was measured to calculate the heat shrinkage rate by the method of the following Calculation Formula 3:

[Calculation Formula 3]

Heat shrinkage rate (%) in TD direction

= ((length before heating - length after heating) / length before heating) × 100

3. ΔGurley permeation

The ΔGurley permeation was calculated by the following Calculation Formula 1, after measuring a Gurley permeability which is a time in seconds it takes for 100 cc of air to pass through an area of 1 square inch of a separator in accordance with the standard of ASTM D726, using a densometer available from Toyoseiki:

[Calculation Formula 1]

ΔGurley permeability (sec/100 cc) = $P_m$ - $P_s$

wherein $P_m$ is a gas permeability of a separator, and $P_s$ is a gas permeability of a porous substrate.

4. Electrochemical properties of battery

Each impedance of the batteries produced in the examples was measured by the following method, using a charge/discharge cycle device.

The temperature of a chamber having the battery inside was maintained at room temperature (25°C), and the battery was charged with a constant current-constant voltage (CC-CV) of 4.2 V and then discharged down to 2.5 V, as a method of measuring life and resistance at room temperature. The charge/discharge was measured by performing 0.5 C charging from 4.2 V to 2.5 V and discharging at 0.5 C 20 times. The resistance was the average value of the DC-IR impedance value of each cycle during the charge and discharge process, and the resistance standard deviation was calculated from each value. In addition, the resistance increase rate was calculated from the following Calculation Formula 2:

[Calculation Formula 2]

Resistance increase rate (%) = (($R_m$ - $R_s$) / $R_s$) × 100

wherein $R_m$ is resistance of a separator, and $R_s$ is resistance of a porous substrate.

[Example 1]

<Production of rod-shaped inorganic binder>

306g of aluminum isopropoxide was dissolved in 1600 g of water to produce an aluminum precursor solution. The aluminum precursor solution was heated to 95°C to be evaporated, thereby removing isopropyl alcohol which was the by-product of the condensation reaction in the solution. 27.9 g of acetic acid was added to the aluminum precursor solution from which isopropyl alcohol had been removed, and the pH was adjusted to 3.3. The aluminum precursor solution of a pH of 3.3 was heated at 5°C/min in a pressurized reactor to set the reaction temperature to 150°C and then the reaction was performed with stirring for 6 hours. The solution after the reaction was cooled naturally.

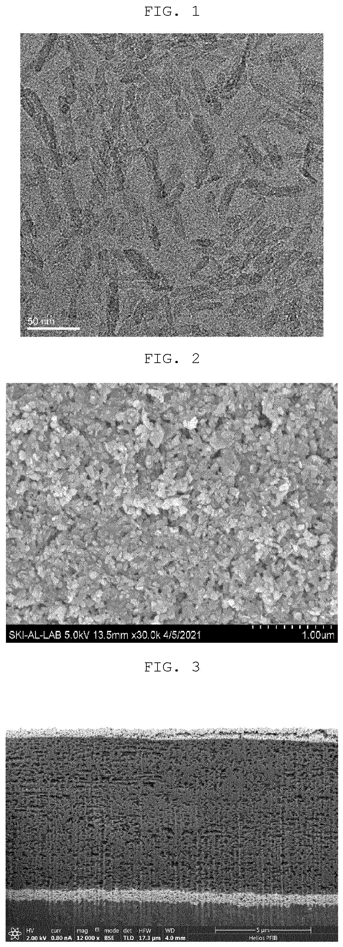

The results of analyzing the inorganic binder produced above with a transmission electron microscope (TEM) are shown in FIG. 1. The diameter and the length of the inorganic nanoparticles were determined from the averages of the values measured by arbitrarily selecting 20 particles, respectively from five transmission electron microscopic images. The average diameter and the average length were 7.5 nm and 40 nm, respectively, and it was confirmed to be a rod-shaped inorganic nanoparticles (rod-shaped pseudo-boehmite) having a length/diameter ratio (L/D) = 5.3.

<Production of separator>

A dispersion formed of 5 wt% of the rod-shaped inorganic binder (average diameter: 7.5 nm, average length: 40 nm, aspect ratio: 5.3, FIG. 1) produced above, 0.3 wt% of the organic acid (acetic acid), and a reminder of water was produced, and relatively spherical boehmite (D50:180 nm) having an average particle diameter of 180 nm was added to the dispersion to produce a coating solution formed of 10 wt% of boehmite (inorganic particles), 0.7 wt% of a rod-shaped pseudo-boehmite (inorganic binder), 0.07 wt% of an organic acid (acetic acid), and a remainder of water.

The both surfaces of a polyethylene film (porosity: 41%) having a thickness of 9 $\mu$m were bar coated with the coating solution produced above and dried to produce a separator having the inorganic particle layer coated on both surfaces of the polyethylene film. The coated thickness of each surface was 1 $\mu$m. The average pore and porosity of the produced separator were 0.04 $\mu$m and 45%, respectively, and the porosity of the inorganic particle layer was 56%.

FIGS. 2 and 3 are scanning electron microscopic images showing the separator according to Example 1. Specifically, FIG. 2 is an SEM photograph of a plane (upper surface) of the separator according to Example 1, and FIG. 3 is an SEM photograph of a cross section of the separator illustrated in FIG. 2. Referring to FIGS. 2 and 3, it was found that the inorganic particles and the rod-shaped inorganic binder were entangled with each other to fix the particles on the surface of the inorganic particle layer of the separator according to Example 1. In addition, it was found that both the porous substrate and the inorganic particle layer had pores well formed on the separator according to Example 1.

The results of measuring the total coating thickness, the heat shrinkage rate, the $\Delta$Gurley permeability, and the peel strength of the produced separator are shown in Table 1.

<Production of positive electrode>

94 wt% of LiCoO$_2$, 2.5 wt% of polyvinyl fluoride, and 3.5 wt% of carbon black were added to N-methyl-2-pyrrolidone (NMP) and stirring was performed to produce a positive electrode slurry. An aluminum foil having a thickness of 30 $\mu$m was coated with the slurry, dried at a temperature of 120°C, and pressed to produce a positive electrode plate having a thickness of 150 $\mu$m.

<Production of negative electrode>

95 wt% of artificial graphite, 3 wt% of Acryl latex having Tg of -52°C (Product name: BM900B, solid content: 20 wt%), and 2 wt% of carboxymethyl cellulose (CMC) were added to water, and stirring was performed to produce a negative electrode slurry. A copper foil having a thickness of 20 $\mu$m was coated with the slurry, dried at a temperature of 120°C, and pressed to produce a negative electrode plate having a thickness of 150 $\mu$m.

<Production of battery>

The positive electrode, the negative electrode, and the separator produced above were used to assembly a pouch type battery in a stacking manner. An ethylene carbonate/ ethyl methyl carbonate/ dimethyl carbonate electrolyte solution (volume ratio of 3:5:2) in which 1 M lithium hexafluorophosphate (LiPF$_6$) was dissolved was injected into the assembled battery to produce a pouch type lithium ion secondary battery having a capacity of 80 mAh. The resistance and the resistance increase rate of the produced battery are shown in Table 1.

[Example 2]

The process was performed in the same manner as in Example 1, except that a rod-shaped pseudo-boehmite having an average diameter of 6.4 nm, an average length of 55 nm, and an aspect ratio of 8.6 was used instead of the rod-shaped inorganic binder used in Example 1. The results are shown in Table 1.

[Example 3]

The process was performed in the same manner as in Example 1, except that a rod-shaped pseudo-boehmite having an average diameter of 5 nm, an average length of 100 nm, and an aspect ratio of 20 was used instead of the rod-shaped inorganic binder used in Example 1. The results are shown in Table 1.

[Example 4]

The process was performed in the same manner as in Example 1, except that before forming an inorganic particle layer, both surfaces of the polyethylene film (porosity: 41%) were corona discharge treated (power density: 2 W/mm) at a speed of 5 mpm (meter per minute) under an air atmosphere to introduce a polar group to the surface. The results are shown in Table 1.

[Comparative Example 1]

A slurry obtained by adding 100 parts by weight of boehmite having an average particle diameter of 180 nm and 1 part by weight of a surfactant (DISPERBYK-102, BYK) to water and dispersing the materials for 5 minutes with a bead mill was produced. An anionic acrylic resin aqueous solution (15%) was added to the slurry so that the anionic acrylic resin (weight average molecular weight: 450,000 g/mol, Aekyung Chemical) is 3 parts by weight with respect to 100 parts by weight of boehmite, and the solution was vigorously stirred by magnetron stirring to produce a water-based slurry having a solid content concentration of 10 wt%.

The both surfaces of the polyethylene substrate of Example 1 were coated with the slurry and dried to produce a separator on which the inorganic active layer having a coated thickness of each surface of 1.0 $\mu$m was formed.

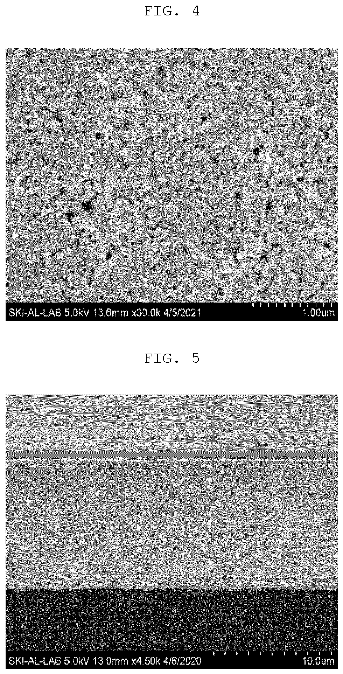

FIGS. 4 and 5 are scanning electron microscopic (SEM) images of the separator according to Comparative Example 1. Specifically, FIG. 4 is an SEM photograph of a plane (upper surface) of the separator according to Comparative Example 1, and FIG. 5 is an SEM photograph of a cross section of the separator illustrated in FIG. 4.

The results of measuring the total coated thickness, the heat shrinkage rate, the $\Delta$Gurley permeability, and the peel strength of the produced separator, and the results of measuring the resistance and the resistance increase rate of the battery produced in the same manner as in Example 1 using the produced separator are shown in Table 1.

[Comparative Example 2]

The process was performed in the same manner as in Comparative Example 1 except the content of the anionic acrylic resin was 5 parts by weight. The results are shown in Table 1.

[Table 1]

| Classification | Physical properties of separator | | | | | | Battery | | |
|---|---|---|---|---|---|---|---|---|---|
| Classification | Thickness | Heat shrinkage rate (%) (TD%) | | | ΔGurley permeation | Peel strength | Resistance (mΩ) | | Resistance increase rate |
| | μm | 150°C | 160°C | 170°C | sec/100 cc | gf/25 mm | Average | Standard deviation | % |
| Example 1 | 2.0 | 1.3 | 1.3 | 2.1 | 35 | 88 | 1408 | 11 | 2.4 |
| Example 2 | 2.0 | 1.3 | 1.4 | 1.8 | 40 | 103 | 1394 | 10 | 1.4 |
| Example 3 | 2.0 | 1.4 | 1.6 | 1.9 | 41 | 105 | 1392 | 9 | 1.3 |
| Example 4 | 2.0 | 0.8 | 0.9 | 1.1 | 36 | 144 | 1387 | 6 | 0.9 |
| Comparative Example 1 | 2.0 | 54 | 55 | 54 | 52 | 22 | 1414 | 29 | 2.8 |
| Comparative Example 2 | 2.0 | 37 | 42 | 49 | 87 | 37 | 1548 | 101 | 12.5 |

Referring to Table 1, it was confirmed that the examples according to the present disclosure had a significantly low heat shrinkage rate to have excellent heat resistance, a significantly low ΔGurley permeability as compared with the comparative example, and a very high peel strength, and thus, had very high adhesion.

In particular, in Examples 1 to 4 using the rod-shaped inorganic binder, it was confirmed that permeability, and peel strength were significantly high, and also, heat shrinkage rate, resistance and the standard deviation of the resistance were low, and the resistance increase rate was significantly low, so that the electrochemical properties were stable.

In addition, in Example 4 in which the both surfaces of the porous substrate were corona discharge treated to introduce a polar group to the surface, an effect of a low heat shrinkage rate which was significantly increased as compared with Examples 1 to 3, in particular, a significantly low heat shrinkage rate at a high temperature was shown, a peel strength was the best, and the lowest characteristics in the resistance increase rate was shown, and thus, it was found that excellent mechanical properties, heat resistance, and electrical properties were shown.

The separator for a secondary battery according to the present disclosure may secure secondary battery stability since inorganic particles are adhered on a porous substrate with high adhesive strength.

In addition, the separator according to the present disclosure has significantly low heat shrinkage even at a high temperature and also has a minimized resistance increase, so that it is chemically stable and may have excellent electrical properties.

In addition, the method for producing a separator for a secondary battery according to the present disclosure may easily produce the separator for a secondary battery having excellent stability and electrical properties.

Furthermore, the separator for a secondary battery according to the present disclosure may have a heat shrinkage rate at 170°C of 5% or less, a ΔGurley permeability of 50 sec/100 cc or less, and a peel strength of 40 gf/25 mm or more.

In addition, the secondary battery including the separator for a secondary battery according to the present disclosure may have excellent electrical properties of a standard deviation of a resistance value (mΩ) of 30 or less and a resistance increase rate of 10% or less.

In addition, as an embodiment, in particular, when a polar group is introduced to the surface of the porous substrate, the separator for a secondary battery according to an embodiment may have better adhesion, heat resistance, and electrical properties, though the aspect ratio (LID ratio) of the rod-shaped inorganic binder is short, less than 30.

Hereinabove, although the present disclosure has been described by the specific matters and limited exemplary embodiments in the present specification, they have been provided only for assisting the entire understanding of the present disclosure, and the present disclosure is not limited to the exemplary embodiments, and various modifications and changes may be made by those skilled in the art to which the present disclosure pertains from the description.

Therefore, the present invention is not limited to the described exemplary embodiments.

**Claims**

1. A separator for a secondary battery comprising:

   a porous substrate; and
   an inorganic particle layer positioned on one or both surfaces of the porous substrate,
   wherein the inorganic particle layer comprises inorganic particles and a rod-shaped inorganic binder.

2. The separator for a secondary battery of claim 1, wherein a polar group is introduced to the surface of the porous substrate on which the inorganic particle layer is positioned by a surface treatment.

3. The separator for a secondary battery of any of claims 1 or 2, wherein the rod-shaped inorganic binder is pseudo-boehmite particles.

4. The separator for a secondary battery of any of claims 1 to 3, wherein the pseudo-boehmite particles have (a) an aspect ratio (LID ratio) of 2 to 30; and/or, (b) an average diameter (D) of 1 to 10 nm; and/or, (c) an average length (L) of 2 to 100 nm.

5. The separator for a secondary battery of any of claims 1 to 4, wherein the inorganic particles have any one or more shapes selected from the group consisting of spherical, prismatic, and amorphous shapes.

6. The separator for a secondary battery of any of claims 1 to 5, wherein the inorganic particles are any one or more selected from metal oxides, metal nitrides, metal carbides, metal carbonates, metal hydrates, and metal carbonitrides, preferably boehmite.

7. The separator for a secondary battery of any of claims 1 to 6, wherein the inorganic particles have an average diameter of 0.001 to 20 $\mu$m.

8. The separator for a secondary battery of any of claims 1 to 7, wherein the inorganic particle layer comprises 3 to 20 parts by weight of the rod-shaped inorganic binder with respect to 100 parts by weight of the inorganic particles.

9. The separator for a secondary battery of any of claims 1 to 8, wherein the porous substrate (a) comprises the polyolefin-based resin, preferably the polyolefin-based resin is one or more selected from the group consisting of high-density polyethylene, low-density polyethylene, linear low-density polyethylene, ultrahigh molecular polyethylene, polypropylene, and copolymers thereof; and/or,

   (b) has an average diameter of pores of 0.01 to 10 $\mu$m; and/or,
   (c) has a porosity of 5 to 95%.

10. The separator for a secondary battery of any of claims 1 to 9, wherein the separator has (a) a peel strength between the porous substrate and the inorganic particle layer of 40 gf/25 mm or more as measured in accordance with ASTM D903, preferably 80 gf/25 mm or more; and/or,

    (b) a heat shrinkage rate at 170°C of 5% or less; and/or,
    (c) a ΔGurley permeability calculated by the following Calculation Formula 1 is 50 sec/100 cc or less, in the Gurley permeability measured in accordance with ASTM D726:

$$[\text{Calculation Formula 1}]$$

$$\Delta\text{Gurley permeability (sec/100 cc)} = P_m - P_s$$

    wherein $P_m$ is a gas permeability of a separator, and $P_s$ is a gas permeability of a porous substrate.

11. The separator for a secondary battery of any of claims 1 to 10, wherein the inorganic particle layer further comprises an organic binder or does not comprise an organic binder.

12. The method for producing a separator for a secondary battery, the method comprising:

    dispersing a rod-shaped inorganic binder in a solvent to produce a dispersion;
    adding inorganic particles to the dispersion to produce a coating solution; and
    coating one or both surfaces of a porous substrate with the coating solution to form an inorganic particle layer.

13. The method for producing a separator for a secondary battery of claim 12, wherein he dispersion (a) further comprises an organic acid; and/or,

    (b) has a hydrogen ion concentration index (pH) of 3 to 6; and/or,
    (c) comprises 0.1 to 10 wt% of the rod-shaped inorganic binder, 0.05 to 1 wt% of the organic acid, and a remainder of the solvent.

14. A secondary battery comprising a negative electrode, a positive electrode, and a separator between the negative electrode and the positive electrode, wherein the separator is the separator for a secondary battery of any one of claims 1 to 11.

15. The secondary battery of claim 14, wherein the secondary battery (a) has a resistance increase rate calculated by the following Calculation Formula 2 of 10% or less, preferably 3% or less; and/or,

    (b) has a standard deviation of a resistance value (m$\Omega$) measured for each unit process of 30 or less, when a unit process of charge and discharge is repeated 20 times at room temperature, preferably 15 or less, and the room temperature is 25±5°C; and/or,
    (c) has an average of the resistance value of 1500 m$\Omega$ or less:

[Calculation Formula 2]

$$\text{Resistance increase rate (\%)} = ((R_m - R_s) / R_s) \times 100$$

wherein $R_m$ is resistance of a separator for a secondary battery, and $R_s$ is resistance of a porous substrate.

FIG. 1

FIG. 2

SKI-AL-LAB 5.0kV 13.5mm x30.0k 4/5/2021          1.00um

FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020140147742